# EUROPÄISCHE PATENTSCHRIFT

(11) **EP 3 091 647 B1**
(45) Veröffentlichungstag und Bekanntmachung des Hinweises auf die Patenterteilung: **09.05.2018**
(21) Anmeldenummer: 16159069.0
(22) Anmeldetag: 08.03.2016
(51) Int. Cl.: H02K 49/10, H02K 7/09, B01F 13/08, B01F 15/00, H02K 7/08, H02K 5/167

(54) **ANTRIEBSEINHEIT FÜR EIN RÜHRWERK UND RÜHRWERK**
DRIVE UNIT FOR AN AGITATOR AND AN AGITATOR
UNITE D'ENTRAINEMENT D'UN AGITATEUR ET AGITATEUR

(30) Priorität: 28.04.2015 DE 102015106566
(43) Veröffentlichungstag der Anmeldung: 09.11.2016
(73) Patentinhaber: PRG Präzisions-Rührer GmbH, 34414 Warburg (DE)
(72) Erfinder: Dierkes, Hubert, 34414 Warburg (DE)
(74) Vertreter: Patentanwälte Olbricht Buchhold Keulertz

(56) Entgegenhaltungen:
- EP-A2- 1 801 420
- DE-A1- 10 318 599

## Beschreibung

Die Erfindung betrifft eine Antriebseinheit für ein Rührwerk, die einen Spalttopf aufweist, auf dem ein Mischkopf mit einem Rührwerkzeug sitzt gemäß dem Oberbegriff von Anspruch 1, sowie ein Rührwerk nach Anspruch 15.

Aus EP 0 210 651 A2 ist beispielsweise ein Rührwerk bekannt, das ein in den Tank hineinragendes Rohr aufweist, wobei der Stator eines elektromotorischen Antriebs in das Rohr gelegt ist. Das Rohr wird zusätzlich von einem zweiten Rohr umhüllt, das seinerseits daran fest angebrachte Rührwerkzeuge aufweist. Das innere Rohr trennt dabei hermetisch den Behälterinhalt von der Umgebung. Das äußere Rohr ist in einen oberen Flanschbereich und am unteren Ende des inneren Rohres gelagert. Für sterile Anwendungsfälle ist dieses Rührwerkzeug gänzlich ungeeignet, da es lange, schwer zugängliche Spaltöffnungen und mehrere Lagerstellen im Behälterinneren aufweist. Außerdem sind für Rührwerke gemäß EP 0 210 651 A2 speziell ausgebildete Motoren erforderlich, deren Kühlung im Inneren des Rohres problematisch sein kann, wenn wie z.B. im Behälter Prozesswärme anliegt, die auf den Motor übertragen wird.

DE 42 32 935 A1 offenbart ein Rührwerk mit einer Rührwerkswelle, einem Antrieb, einem Rührwerkzeug und einer berührungslos wirkenden Kupplung zur Übertragung eines Antriebsmomentes. Die Rührwerkswelle ist von einem einseitig offenen Rohr umhüllt und durch die Öffnung des Rohres mit einem außen liegenden Motor verbunden, wobei die berührungslos wirkende Kupplung zwischen Rührwerkswelle und dem außerhalb des Rohres angeordneten Rührwerk vorgesehen ist.

DE 103 18 599 A1 offenbart ein Magnetrührwerk, welches in rotatorischer und axialer Richtung mechanisch auf einem Spalttopf gelagert ist, welcher den Innenraum des Rührbehälters von der Umgebung abschließt. Der Antrieb des Mischkopfs erfolgt berührungslos mit einer Magnetkopplung. Das Rührwerkzeug und eine zugehörige Gleitlagerung liegen im Innenraum des Rührbehälters. Dabei wird das Rührwerkzeug mit mechanischen Mitteln gegen axiales Abheben gesichert.

Dies hat mehrere Nachteile. So kommt es zum einen durch die mechanische Lagerung zu Abrieb in den Lagerkontaktzonen, der zu einer Verunreinigung des Rührgutes führt. Des Weiteren ist zur Schmierung der Gleitlagerung eine Mindestfüllstandshöhe beim Entleervorgang einzuhalten, da ein Trockenlaufen der Lagerung unweigerlich zu einer Beschädigung des Lagers führt. Weiterhin können nicht alle Rührmedien mit einer solchen Lagerung gerührt werden, da bestimmte Stoffe und Stoffzustände zu tribologischen Effekten wie Adhäsion und/oder Abrasion im Bereich des Lagers führen können, die das Gleitlager beschädigen. Weiterhin ist der Bereich der Gleitlagerung schlecht zu reinigen. Hier sammeln sich Reststoffmengen, die zu Bakterien- und Keimablagerungen führen. Die mechanische Sicherung des Rührwerkzeugs erschwert zusätzlich die Demontage zu Reinigungszwecken oder zum Werkzeugtausch. Sie bildet weitere Zwischenräume, die schlecht von Reststoffen gereinigt werden können und zu Bakterien- und Keimablagerungen führen.

DE 10 2009 021 992 B3 lehrt ein Magnetrührwerk mit einem Antrieb, einem Rührwerkzeug, einer in einem Spalttopf angeordneten Antriebswelle und einer berührungslos wirkenden Magnetkupplung zur Übertragung eines Antriebsmomentes vom Antrieb auf einen Mischkopf. Dabei ist der Mischkopf auf dem Spalttopf in allen Freiheitsgraden magnetisch gelagert, insbesondere durch im Spalttopf angeordnete Richtmagnete und Tragmagnete welche geregelte Elektromagnete sind, die jeweils mit einer Magnetregeleinrichtung verbunden sind. Eine derartige Lagerung ist sehr komplex und teuer.

Aus der EP 1 801 420 A2 ist eine Kreiselpumpe mit permanentmagnetischer berührungsfreier Radialdrehkupplung bekannt, die über ein radial äußeres Organ und ein radial inneres Organ verfügt, in denen Magnete mit ihren Polen sowohl in Umfangsrichtung, als auch in axialer Richtung jeweils wechselweise angeordnet sind.

Aufgabe der Erfindung ist es daher ein Rührwerk zu schaffen, bei dem der Raum zwischen dem Mischkopf und dem Spalttopf leicht zu reinigen ist. Weiterhin sollte die Anzahl der Bauteile im Innenraum des Rührbehälters reduziert werden, um keine weiteren für die Reinigung schlecht zugänglichen Bereiche zu gestalten. Das Rührwerk sollte das Rührgut weder durch Abrieb noch durch Ausscheidungen/Ausdunstungen verunreinigen. Das Rührwerk sollte auch bei kleinen Mengen, Restmengen oder beim Entleeren funktionstüchtig sein und bleiben, sowie für eine Vielzahl an Rührmedien und deren Zustände geeignet sein. Ferner sollte das Rührwerk wartungsfreundlich, langlebig im Betrieb und dabei kostengünstig in der Herstellung sein.

Hauptmerkmale der Erfindung sind im kennzeichnenden Teil von Anspruch 1 sowie in Anspruch 15 angegeben. Ausgestaltungen sind Gegenstand der Ansprüche 2 bis 14.

Die Erfindung betrifft eine Antriebseinheit für ein Rührwerk, mit einem Spalttopf, auf dem ein Mischkopf mit einem Rührwerkzeug sitzt. Dabei ist der Mischkopf über ein Gleitlager rotierbar um eine Rotationsachse und entlang der Rotationsachse längsverschiebbar relativ zum Spalttopf gelagert. Im Spalttopf ist eine Magnetfeldeinheit aufgenommen, mit der ein um den Spalttopf, insbesondere auch um die Rotationsachse, rotierendes Magnetfeld erzeugbar ist. Der Mischkopf weist erste Drehmomentmagnete auf, welche eine Drehmomentkopplung mit der Magnetfeldeinheit ausbilden. Dabei ist der Mischkopf mittels der Drehmomentkopplung und des rotierenden Magnetfelds rotierend um die Rotationsachse antreibbar. Zudem weist die Magnetfeldeinheit im Spalttopf zumindest erste Linearmagnete auf, welche eine Lagekopplung mit zweiten Linearmagneten des Mischkopfes ausbilden. Hierzu weisen die ersten und zweiten Linearmagnete jeweils magnetische Pole auf, die im Wesentlichen parallel, vorzugsweise mit maximal 30 Grad und besonders bevorzugt bis maximal 15 Grad Winkelabweichung, zur Rotationsachse ausgerichtet sind. Die magnetischen Pole der ersten Linearmagnete sind gleich ausgerichtet und die magnetischen Pole der zweiten Linearmagnete sind gleich ausgerichtet. Jedoch sind die magnetischen Pole der ersten Linearmagnete umgekehrt zu den Polen der zweiten Linearmagnete ausgerichtet.

Die erfindungsgemäße Ausrichtung der Linearmagnete bewirkt eine doppelte magnetische Lagesicherung, denn zum einen ziehen sich die Nord- und Südpole der Linearmagnete an und orientieren sich relativ zueinander in eine Nullpunktlage. Bei einer axialen Verschiebung aus der Nullpunktlage heraus stoßen sich zudem zwei gleiche Pole der Linearmagnete ab und verstärken die Rückführungskräfte in die Nullpunktlage. Indem der Mischkopf am Gleitlager geführt ist, entsteht eine stabile Lagerung, die in der Lage ist, auch relativ große axiale Kräfte auf den Mischkopf zu kompensieren. Dies ist insbesondere bei Anwendungen relevant, bei denen inhomogene Massen vermischt und unter Umständen schrittweise vermengt werden. Dabei sind die Linearmagnete vorzugsweise oberhalb der Drehmomentmagnete angeordnet, d.h. insbesondere auf der Seite des freien Endes des Spalttopfes. Optional kann jedoch auch eine umgekehrte Anordnung erfolgen, d.h. die Linearmagnete sind dann näher am Behälterboden angeordnet als die Drehmomentmagnete.

Ebenso ist es möglich, sowohl oberhalb als auch unterhalb der Drehmomentmagnete Linearmagnete anzuordnen, also zusätzliche dritte Linearmagnete im Spalttopf und vierte, damit zusammenwirkende Linearmagnete im Mischkopf.

Der für Verschmutzung anfällige Bereich um die Lagerung des Mischkopfes lässt sich gut reinigen. Das Rührwerk ist entsprechend wartungsfreundlich, langlebig im Betrieb und aufgrund der einfachen Lagerung mit Permanentmagneten anstelle von Elektromagneten kostengünstig in der Herstellung.

In einer bevorzugten Ausgestaltung ist das Gleitlager oberhalb des Spalttopfes bzw. dessen Hohlraum angeordnet. Entsprechend können die Umfangswandungen des Spalttopfs und des Mischkopfes vorrangig auf die magnetische Drehmomentkopplung und magnetische Lagesicherung ausgelegt werden. Oberhalb des Spalttopfes wird das Gleitlager bevorzugt mit kleinerem Durchmesser ausgestaltet als der Durchmesser des Spalttopfes. Im Bereich des Lagers tritt dadurch eine geringe Umfangsgeschwindigkeit auf. Des Weiteren sind die Lagerflächen des Gleitlagers vorzugsweise mit einer diamanthaltigen Beschichtung versehen, insbesondere umfassend Diamantstaub. Dies minimiert Verschleiß.

Gemäß einer speziellen Ausgestaltung der Antriebseinheit ist vorgesehen, dass die magnetischen Nordpole der ersten Linearmagnete auf einem ersten Nordpolkranz, insbesondere auf einer Kreisbahn, um die Rotationsachse angeordnet sind, dass die magnetischen Südpole der ersten Linearmagnete auf einem ersten Südpolkranz, insbesondere auf einer Kreisbahn, um die Rotationsachse angeordnet sind, wobei der erste Südpolkranz in Richtung der Rotationsachse axial versetzt zum ersten Nordpolkranz angeordnet ist. Zusätzlich sind die magnetischen Nordpole der zweiten Linearmagnete auf einem zweiten Nordpolkranz, insbesondere auf einer Kreisbahn, um die Rotationsachse angeordnet, und die magnetischen Südpole der zweiten Linearmagnete auf einem zweiten Südpolkranz, insbesondere auf einer Kreisbahn, um die Rotationsachse angeordnet, wobei der zweite Südpolkranz in Richtung der Rotationsachse axial versetzt zum zweiten Nordpolkranz angeordnet ist.

Durch die Kranzanordnung ergibt sich eine stabile, gleichmäßig verteilte magnetische Haltekraft, welche zudem eine Lagestabilisierung durch Dämpfung bewirkt, was insbesondere bei geringen Rotationsgeschwindigkeiten des Mischkopfes einen ruhigen Umlauf bewirkt.

Bevorzugt sind die Nord- und Südpolkränze in Umfangsrichtung um die Rotationsachse zu über 75%, vorzugsweise zu mehr als 85% und besonders bevorzugt zu mehr als 90% von den Linearmagneten geschlossen ausgebildet. Optional können die ersten Linearmagnete und/oder die zweiten Linearmagnete jeweils durch einen Rohrmagneten ausgebildet sein, dessen erstes Rohrende einen magnetischen Südpol und dessen zweites Rohrende einen magnetischen Nordpol ausbildet. Je geschlossener die Kränze ausgebildet sind, desto gleichmäßiger wird der Mischkopf gestützt. Bei einer derart hohen Besatzdichte auf den Kränzen wird es zudem ermöglicht, die ersten Linearmagnete ortsfest, insbesondere rotationsfest, im Spalttopf anzuordnen. Selbst bei einer Relativverdrehung zwischen ersten und zweiten Linearmagneten werden verhältnismäßig gleichmäßig große Lagehaltekräfte erzeugt.

Eine besonders konstante Lagehaltekraft wird erreicht, wenn die ersten Linearmagnete um die Rotationsachse rotierbar gelagert sind. Die ersten Linearmagnete können dann mit gleicher Rotationsgeschwindigkeit wie die zweiten Linearmagnete rotieren und es kommt zu keinen Relativverschiebungen der ersten und zweiten Linearmagnete zueinander. Entsprechend ändert sich die Lagehaltekraft nicht durch sich ändernde Polabstände.

Des Weiteren sieht eine spezielle Ausgestaltung der Erfindung vor, dass die zweiten Linearmagnete des Mischkopfes in der gleichen Mantelfläche um die Rotationsachse angeordnet sind wie die ersten Drehmomentmagnete des Mischkopfes, wobei die Mantelfläche vorzugsweise die Form eines Kegelmantels oder eines Zylindermantels hat. Damit gelingt eine besonders kompakte und wenig komplexe Ausgestaltung des Mischkopfes, wodurch dessen Herstellkosten gering sind und eine einfache Reinigung möglich ist.

Vorzugsweise weisen die ersten Linearmagnete die gleiche Länge auf wie die zweiten Linearmagnete. Bei gleicher Länge der ersten und zweiten Linearmagnete wird ein Optimum hinsichtlich eines geringen Gewichtes bei hohen Lagehaltekräften erreicht.

Um möglichst hohe Lagehaltekräfte erreichen zu können, bietet es sich an, die zweiten Linearmagnete in dem Mischkopf im Bereich benachbart zum Außenumfang des Spalttopfes erstreckend anzuordnen. Damit sind sie möglichst dicht am Spalttopf und mithin nah an den darin angeordneten ersten Linearmagneten positioniert. Zusätzlich sollten sich die ersten Linearmagnete in dem Spalttopf im Bereich des Außenumfangs des Spalttopfes erstrecken.

Auch hierdurch wird eine möglichst dichte Anordnung der ersten Linearmagnete an den zweiten Linearmagneten erreicht.

Im Gegensatz zu den polgleichen Kranzanordnungen der Linearmagnete, bietet es sich an, wenn die ersten Drehmomentmagnete auf einer äußeren Kreisbahn um die Rotationsachse jeweils abwechselnd benachbart angeordnete magnetische Nordpole und Südpole ausbilden. Diese bewirken dann eine besonders große Kopplungskraft in Drehrichtung.

Gemäß einer speziellen Ausgestaltung sind die magnetischen Nordpole und Südpole der ersten Drehmomentmagnete im Wesentlichen senkrecht, vorzugsweise mit maximal 30 Grad und besonders bevorzugt bis maximal 15 Grad Winkelabweichung, zur Rotationsachse ausgerichtet. Hierdurch wird eine kräftige Drehmomentkopplung bewirkt.

Gemäß einer Variante der Antriebseinheit weist die Magnetfeldeinheit einen Stator mit elektrischen Leiterwicklungen auf, wobei das um den Spalttopf rotierende Magnetfeld ein mit den Leiterwicklungen elektronisch erzeugtes Magnetfeld ist. Hierdurch ist der Spalttopf inklusive Antrieb sehr kompakt. Geeignet sind beispielsweise Ausgestaltungen, bei denen die elektrischen Leiterwicklungen im Stern, vorzugsweise 3-phasig im Stern elektrisch verschaltet sind, wobei auf einem Statorkörper vorzugsweise 2 bis 12, bevorzugt 4 bis 8 und besonders bevorzugt 6 Motorwicklungen angeordnet sind.

Eine andere Variante sieht vor, dass die Magnetfeldeinheit zweite Drehmomentmagnete aufweist, welche an einer Antriebswelle rotierbar um die Rotationsachse innerhalb des Spalttopfes gelagert sind. Die Antriebswelle erlaubt es, einen Antriebsmotor direkt oder über ein Getriebe anzukoppeln. Dieser kann ein Zukaufmotor sein, der nicht speziell in den Spalttopf integriert, sondern außerhalb positionierbar ist. Hierdurch ist der Antriebsmotor auch deutlich weniger Prozesswärme ausgesetzt, die im Rührwerk in vielen Anwendungen vorliegt.

Alle Linearmagnete und Drehmomentmagnete können jeweils Permanentmagnete sein, die eine besonders kostengünstige Ausgestaltung der Antriebseinheit erlauben.

Die magnetischen Nordpole und Südpole der zweiten Drehmomentmagnete sollten im Wesentlichen senkrecht, vorzugsweise mit maximal 30 Grad und besonders bevorzugt bis maximal 15 Grad Winkelabweichung, zur Rotationsachse ausgerichtet sein. Hierdurch wird eine kräftige Drehmomentkopplung bewirkt.

In einer solchen Ausgestaltungsvariante ist es zudem möglich, die zweiten Drehmomentmagnete rotationsfest mit den ersten Linearmagneten zu verbinden. Die ersten Linearmagnete rotieren dann mit der Antriebswelle mit und rotieren dann bei normalen Betriebsbedingungen mit gleicher Geschwindigkeit wie die zweiten Linearmagneten. Entsprechend konstant sind die wirkenden Lagehaltekräfte.

Optional können die ersten Linearmagnete in der gleichen Mantelfläche relativ zur Rotationsachse angeordnet sein wie die zweiten Drehmomentmagnete, wobei die Mantelfläche vorzugsweise die Form eines Kegelmantels oder eines Zylindermantels hat. Es ergibt sich eine sehr kompakte und preiswerte Ausgestaltung, denn die Magnete können sich einen einfach konstruierten Träger teilen, beispielsweise können die ersten Linearmagnete und die zweiten Drehmomentmagnete in jeweils gemeinsamen Axial-Nuten eingelegt und befestigt sein.

Zur Übertragung hoher Drehmomente sollten die zweiten Drehmomentmagnete auf einer inneren Kreisbahn um die Rotationsachse jeweils abwechselnd benachbart angeordnete magnetische Nordpole und Südpole ausbilden. Sofern die ersten Drehmomentmagnete auf einer äußeren Kreisbahn um die Rotationsachse ebenfalls jeweils abwechselnd benachbart angeordnete magnetische Nordpole und Südpole ausbilden, insbesondere wenn diese in gleicher Verteilung angeordnet sind, zieht sich jeweils ein Paar der Drehmomentmagnete an und bei einer Relativverdrehung der ersten zu den zweiten Drehmomentmagneten wirken die überkreuz benachbarten gleichen Pole durch Abstoßung entgegen. Bevorzugt entspricht die Anzahl der Nord- und Südpole auf der äußeren Kreisbahn der Anzahl der Nord- und Südpole auf der inneren Kreisbahn. Außerdem sollten sie gleichermaßen und bevorzugt gleichmäßig über den Umfang verteilt angeordnet sein.

Gemäß einer speziellen Variante erstreckt sich jeweils ein Magnetpaar bestehend aus einem der ersten Linearmagnete und einem der zweiten Drehmomentmagnete entlang eines stabförmigen Bereichs. Dies ermöglicht eine kompakte und wenig komplexe Anordnung der Magnete. Hierzu haben die ersten Linearmagnete und zweiten Drehmomentmagnete jeweils eine gleich große Dicke senkrecht zur Rotationsachse und eine gleich große Breite auf der Kreisbahn um die Rotationsachse.

In bevorzugter Ausführung der Variante ist vorgesehen, dass die Magnetpaare in einer Mantelfläche um die Rotationsachse angeordnet sind, wobei in Umfangsrichtung um die Rotationsachse benachbart abwechselnd ein erster Paartyp und ein zweiter Paartyp angeordnet sind, wobei der erste Paartyp ein Magnetpaar ist, bei dem der erste Linearmagnet mit dem magnetischen Pol in Richtung des zweiten Drehmomentmagnets weist, der vom zweiten Drehmomentmagnet von der Rotationsachse weg weist, und wobei der zweite Paartyp ein Magnetpaar ist, bei dem der erste Linearmagnet mit dem magnetischen Pol in Richtung des zweiten Drehmomentmagnets weist, der vom zweiten Drehmomentmagnet in Richtung der Rotationsachse weist.

Der erste Linearmagnet und der zweite Drehmomentmagnet eines Magnetpaares können sich berührend oder mit Abstand zueinander angeordnet sein. Insbesondere können sich jeweils ein Magnetpaar bestehend aus einem der zweiten Linearmagnete und einem der ersten Drehmomentmagnete entlang eines stabförmigen Bereichs erstrecken. Es wird jeweils eine kompakte Ausgestaltung erreicht. Hierzu haben die zweiten Linearmagnete und ersten Drehmomentmagnete jeweils eine gleich große Dicke senkrecht zur Rotationsachse und eine gleich große Breite auf der Kreisbahn um die Rotationsachse.

Äquivalent können auf Seiten des Magnetkopfes die Magnetpaare in einer Mantelfläche um Rotationsachse angeordnet sein, wobei in Umfangsrichtung um die Rotationsachse benachbart abwechselnd ein dritter Paartyp und ein vierter Paartyp angeordnet sind, wobei der dritte Paartyp ein Magnetpaar ist, bei dem der zweite Linearmagnet mit dem magnetischen Pol in Richtung des ersten Drehmomentmagnets weist, der vom ersten Drehmomentmagneten in Richtung der Rotationsachse weist, und wobei der vierte Paartyp ein Magnetpaar ist, bei dem der zweite Linearmagnet mit dem magnetischen Pol in Richtung des ersten Drehmomentmagnets weist, der vom ersten Drehmomentmagneten von der Rotationsachse weg weist. Auch hier kann vorgesehen sein, dass der zweite Linearmagnet und der erste Drehmomentmagnet eines Magnetpaares sich berührend oder mit Abstand zueinander angeordnet sind.

Bei einer solchen Ausgestaltung sollte jeweils einer der ersten Paartypen ein Kopplungspaar mit einem diesem gegenüberliegenden dritten Paartyp ausbilden, und jeweils einer der zweiten Paartypen ein Kopplungspaar mit einem diesem gegenüberliegenden vierten Paartyp ausbilden. Es ergibt sich eine mit hohem Drehmoment belastbare Drehkopplung, welche im Wesentlichen durch die Drehmomentmagnete bewirkt ist. Gleichzeitig erfolgt eine magnetische axiale Lagesicherung mittels der Linearmagnete.

Gemäß einer speziellen Ausführungsform sind die zweiten Drehmomentmagnete länger, insbesondere in axialer Richtung der Rotationsachse, als die ersten Linearmagnete. Hierdurch sind große Drehmomente übertragbar. Gleichzeitig bilden die kurzen Linearmagnete eine kräftige Haltekraft aus, welche nur kleine axiale Hübe zulässt.

Es bietet sich des Weiteren an, wenn die ersten Drehmomentmagnete die gleiche Länge aufweisen wie die zweiten Drehmomentmagnete.

Optional ergänzt sein kann die Antriebseinheit dadurch, dass im Mischkopf Sensormagnete angeordnet sind, die mit einem Sensor am Spalttopf zusammenwirken, insbesondere um eine axiale Position des Mischkopfs entlang der Rotationsachse auf dem Spalttopf und/oder eine Rotationsgeschwindigkeit des Mischkopfes zu detektieren. Die Detektion kann zur Kontrolle der korrekten Funktion der Antriebseinheit herangezogen werden. Bevorzugt sind die Sensormagnete im Kragenbereich und der Sensor vorzugsweise im Bodenbereich des Spalttopfes angeordnet. Dieser Bereich ist für einen Verbau des Sensors leicht zugänglich, wobei der Sensor vorzugsweise außerhalb der Nasszone des Rührbehältnisses angeordnet wird.

Eine weitere Ergänzung der Antriebseinheit kann eine Antriebssteuerung umfassen, insbesondere zur Drehzahlsteuerung und/oder zur Drehmomentsteuerung des Mischkopfes.

Zur einfachen Reinigung sollten die ersten Drehmomentmagnete und die zweiten Linearmagnete, vorzugsweise auch die Sensormagnete, in dem Mischkopf gekapselt aufgenommen sein.

Die Erfindung betrifft außerdem ein Rührwerk mit einem Mischbehälter, der einen Behälterboden aufweist, wobei am Behälterboden eine vorstehend beschriebene Antriebseinheit angeordnet ist, wobei der Mischkopf auf dem Spalttopf angeordnet und mit dem Rührwerkzeug oberhalb des Behälterbodens rotierbar ist. Die Vorteile des Rührwerks entsprechen in Abhängigkeit der optionalen Ausgestaltungsmöglichkeiten denen der Antriebseinheit wie vorstehend beschriebenen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Schnitt durch ein Rührwerk;
- Fig. 2: einen Schnitt durch einen Teil eines Mischkopfes und einen Teilausschnitt einer Magneteinheit;
- Fig. 3: eine perspektivische Ansicht der in Fig. 2 gezeigten Magneteinheit;
- Fig. 4: eine perspektivische Ansicht eines Teils eines Mischkopfes; und
- Fig. 5: ein perspektivische Ansicht eines Zusammenbaus der in den Fig. 3 und 4 gezeigten Magneteinheit und des Teils des Mischkopfes.

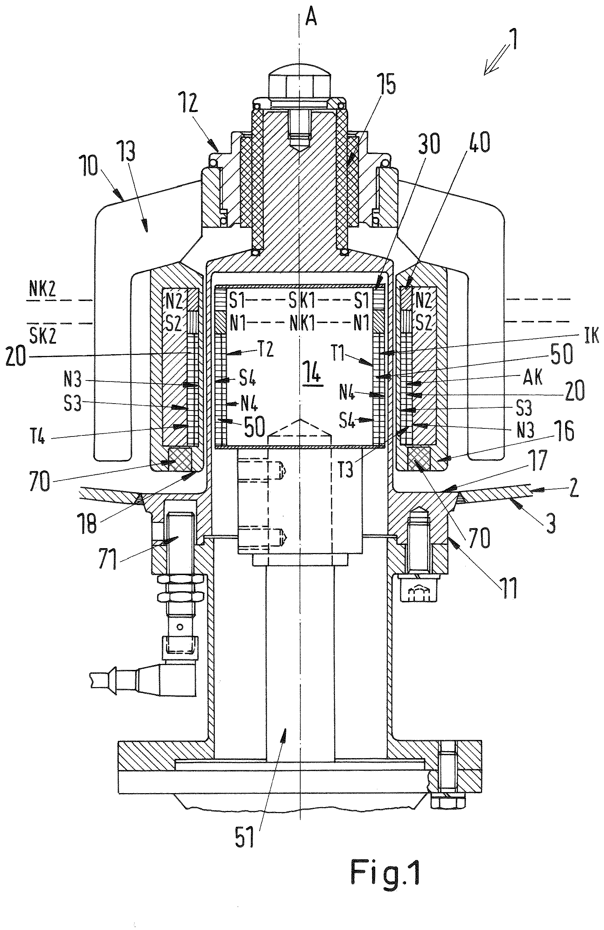

In **Fig. 1** ist ein Schnitt durch ein Rührwerk 1 gezeigt. Zu dem Rührwerk 1 gehören ein nicht vollständig dargestellter Mischbehälter 2, der einen Behälterboden 3 aufweist und eine Antriebseinheit 10. Die Antriebseinheit 10 ist am Behälterboden 3 angeordnet. Hierzu verfügt die Antriebseinheit 10 über einen Spalttopf 11, dessen Topföffnung in Bezug zum Mischbehälter 2 nach außen offen ausgebildet ist und dessen Topfboden ins Innere des Mischbehälters 2 ragt. Hierdurch bildet der Spalttopf 11 eine zumindest teilweise hohle Achse im Inneren des Mischbehälters 2 aus.

Außerdem verfügt die Antriebseinheit 10 über einen Mischkopf 12 mit einem Rührwerkzeug 13, der auf dem Spalttopf 11 sitzt. Der Mischkopf 12 ist auf dem Spalttopf 11 inklusive dem Rührwerkzeug 13 oberhalb des Behälterbodens 3 rotierbar. Dafür ist der Mischkopf 12 über ein Gleitlager 15 rotierbar um eine Rotationsachse A und entlang der Rotationsachse A längsverschiebbar relativ zum Spalttopf 11 gelagert. Das Gleitlager 15 liegt oberhalb des Hohlraumes des Spalttopfes 11 und hat einen kleineren Durchmesser als dieser Hohlraum. Insofern wird der glockenförmige untere Bereich des Spalttopfes 11 oben durch einen Zapfen fortgesetzt, wobei letzterer insbesondere aus einem Vollmaterial besteht.

Im Spalttopf 11 ist eine Magnetfeldeinheit 14 aufgenommen, mit der ein um den Spalttopf 11, insbesondere um dessen Hohlraum und um die Rotationsachse A rotierendes Magnetfeld erzeugbar ist. Auf der Gegenseite verfügt der Mischkopf 12 über erste Drehmomentmagnete 20, welche eine Drehmomentkopplung mit der Magnetfeldeinheit 14 ausbilden. Der Mischkopf 12 ist mittels der Drehmomentkopplung und des rotierenden Magnetfelds rotierend um die Rotationsachse A antreibbar.

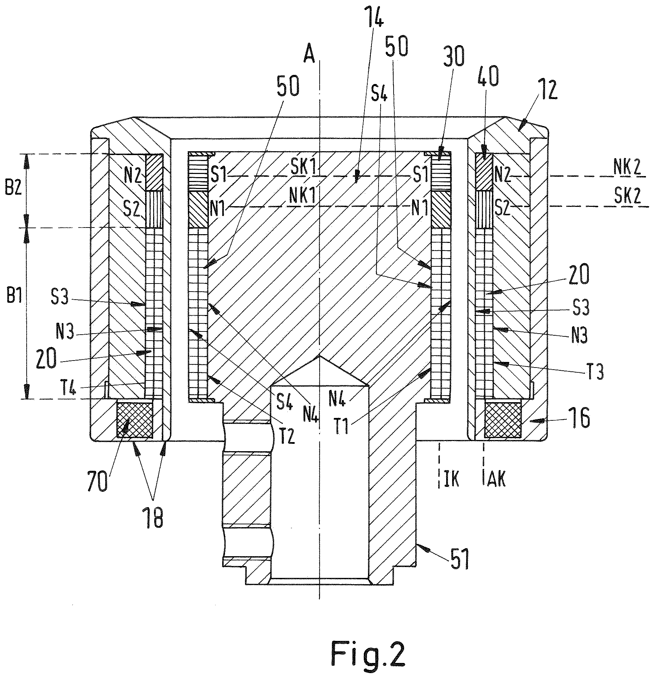

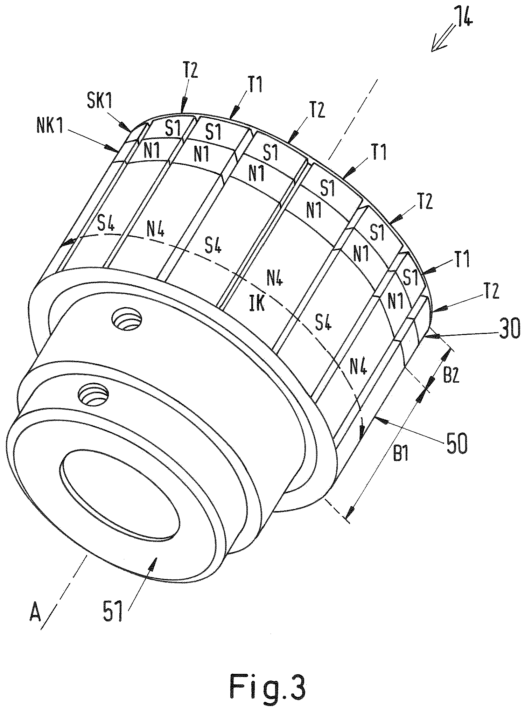

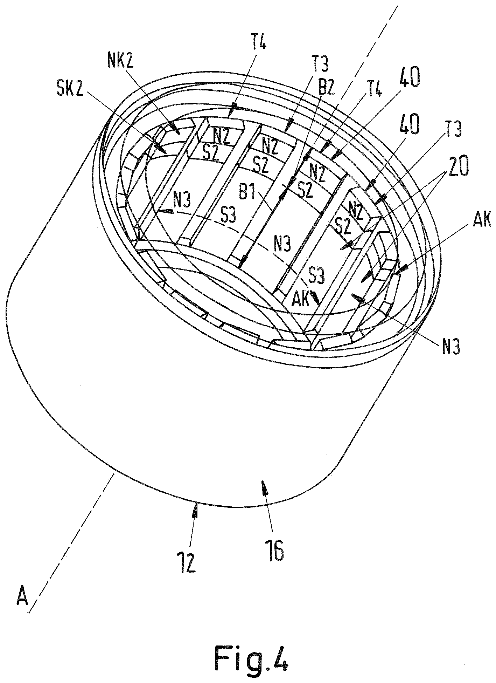

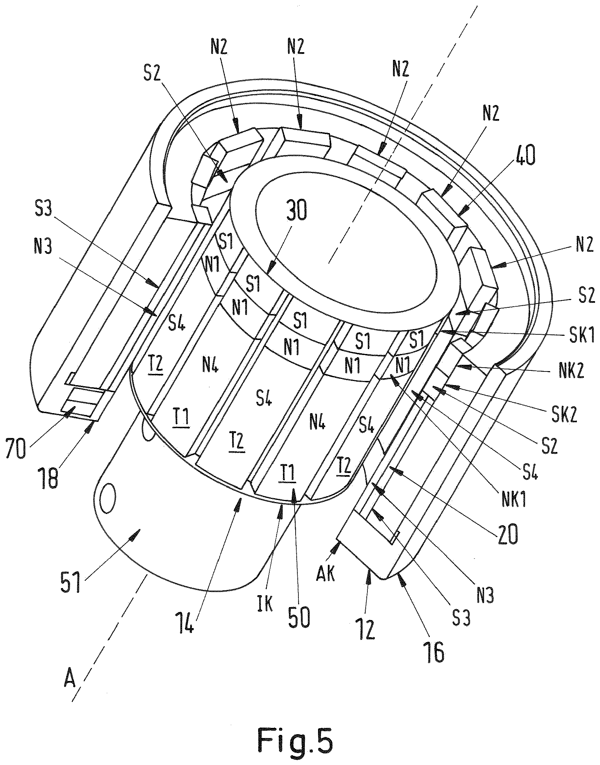

Eine vergrößerte und isolierte Darstellung eines solchen Mischkopfs 12 und einer solchen Magnetfeldeinheit 14 ist im Schnitt nach Fig. 2 zu sehen. Außerdem zeigen Fig. 3 eine perspektivische Ansicht der in Fig. 2 gezeigten Magneteinheit 14 und Fig. 4 eine perspektivische Ansicht des in Fig. 2 gezeigten Mischkopfes 12. In der perspektivischen Ansicht eines Zusammenbaus mit 120°-Schnitt nach Fig. 5 sind die in den Fig. 3 und 4 gezeigte Magneteinheit 14 und der Mischkopf 12 relativ zueinander positioniert.

Gemäß den Fig. 1, 2, 4 und 5 bilden die ersten Drehmomentmagnete 20 auf einer äußeren Kreisbahn AK um die Rotationsachse A jeweils abwechselnd benachbart angeordnete magnetische Nordpole N3 und Südpole S3 aus. Die magnetischen Nordpole N3 und Südpole S3 der ersten Drehmomentmagnete 20 sind senkrecht zur Rotationsachse A ausgerichtet.

Im gezeigten Ausführungsbeispiel verfügt die Magnetfeldeinheit 14 über zweite Drehmomentmagnete 50 (siehe Fig. 1, 2, 3 und 5), welche an einer Antriebswelle 51 rotierbar um die Rotationsachse A innerhalb des Spalttopfes 11 angeordnet sind (siehe Fig. 1). Die zweiten Drehmomentmagnete 50 bilden auf einer inneren Kreisbahn IK um die Rotationsachse A jeweils abwechselnd benachbart angeordnete magnetische Nordpole N4 und Südpole S4 aus (vgl. Fig. 3 und 5). Dabei sind die magnetischen Nordpole N4 und Südpole S4 der zweiten Drehmomentmagnete 50 senkrecht zur Rotationsachse A ausgerichtet. Die Anzahl der Nord- und Südpole N3, S3 auf der äußeren Kreisbahn AK entspricht der Anzahl der Nord- und Südpole N4, S4 auf der inneren Kreisbahn IK. Außerdem liegen sich die Pole N3, N4, S3, S4 auf der inneren Kreisbahn IK und der äußeren Kreisbahn AK paarweise, gleichverteilt gegenüber (siehe Fig. 5).

Optional kann die Magnetfeldeinheit 14 statt der zweiten Drehmomentmagnete 50 jedoch auch einen Stator mit elektrischen Leiterwicklungen aufweisen, wobei das um den Spalttopf 11 rotierende Magnetfeld ein mit den Leiterwicklungen elektronisch erzeugtes Magnetfeld ist.

Zur axialen Lagesicherung des Mischkopfes 12 auf dem Spalttopf 11 entlang der Rotationsachse A ist die Magnetfeldeinheit 14 im Spalttopf 11 zusätzlich mit ersten Linearmagneten 30 ausgestattet, welche eine axial in Richtung der Rotationsachse A wirkende Lagekopplung mit zweiten Linearmagneten 40 des Mischkopfes 12 ausbilden (vgl. Fig. 1, 2 und 5). Die ersten und zweiten Linearmagnete 30, 40 haben jeweils magnetische Pole N1, N2, S1, S2, die parallel zur Rotationsachse A ausgerichtet sind (siehe Fig. 1 bis 5). Alle magnetischen Pole N1, S1 der ersten Linearmagnete 30 sind gleich ausgerichtet (siehe Fig. 1, 2, 3 und 5). Auch alle magnetischen Pole N2, S2 der zweiten Linearmagnete 40 sind gleich ausgerichtet (siehe Fig. 1, 2, 4 und 5), wobei jedoch die magnetischen Pole N1, S1 der ersten Linearmagnete 30 umgekehrt bzw. entgegengesetzt zu den Polen N2, S2 der zweiten Linearmagnete 40 ausgerichtet sind (siehe Fig. 1, 2 und 5).

Man erkennt, dass die magnetischen Nordpole N1 der ersten Linearmagnete 30 auf einem ersten Nordpolkranz NK1 auf einer Kreisbahn um die Rotationsachse A angeordnet sind (vgl. Fig. 1, 2, 3 und 5). Gleichermaßen sind die magnetischen Südpole S1 der ersten Linearmagnete 30 auf einem ersten Südpolkranz SK1 auf einer Kreisbahn um die Rotationsachse A angeordnet (vgl. Fig. 1, 2, 3 und 5). Die Kränze NK1, SK1 haben den gleichen Durchmesser und der erste Südpolkranz SK1 ist in Richtung der Rotationsachse A axial versetzt zum ersten Nordpolkranz NK1 positioniert (vgl. Fig. 1, 2, 3 und 5). Außerdem ist der Durchmesser größer als der Durchmesser des Gleitlagers 15 (vgl. Fig. 1). Dabei weisen die ersten Linearmagnete 30 die gleiche Länge auf wie die zweiten Linearmagnete 40 (vgl. Fig. 1, 2 und 5).

Umgekehrt stellt sich die Anordnung der zweiten Linearmagnete 40 dar. Hier liegen die magnetischen Nordpole N2 auf einem zweiten Nordpolkranz NK2 auf einer Kreisbahn um die Rotationsachse A (vgl. Fig. 1, 2, 4 und 5). Die magnetischen Südpole S2 der zweiten Linearmagnete 40 befinden sich auf einem zweiten Südpolkranz SK2 auf einer Kreisbahn um die Rotationsachse A und der zweite Südpolkranz SK2 ist in Richtung der Rotationsachse A axial versetzt zum zweiten Nordpolkranz NK2 angeordnet (vgl. Fig. 1, 2, 4 und 5).
Dabei sind die Nord- und Südpolkränze NK1, NK2, SK1, SK2 in Umfangsrichtung um die Rotationsachse A zu über 75%, vorzugsweise zu mehr als 85% und besonders bevorzugt zu mehr als 90% von den Linearmagneten 30, 40 geschlossen ausgebildet (vgl. Fig. 3, 4 und 5). Je geschlossener der Umfang ausgebildet ist, desto mehr nähert sich das durch die ersten auf die zweiten Linearmagnete 30, 40 übertragbare Drehmomente null an, und desto gleichmäßiger und stärker ist die axiale Lagesicherung des Mischkopfes 12 auf dem Spalttopf 11.

Optional besteht die Möglichkeit, die ersten Linearmagnete 30 und/oder die zweiten Linearmagnete 40 jeweils durch einen Rohrmagneten auszubilden, dessen erstes Rohrende einen magnetischen Südpol S1, S2 und dessen zweites Rohrende einen magnetischen Nordpol N1, N2 ausbilden.

Man erkennt, dass die Linearmagnete 30, 40 jeweils oberhalb der Drehmomentmagnete 20, 50 angeordnet sind, d.h. insbesondere auf der Seite des freien Endes des Spalttopfes 11 bzw. auf der Seite des Gleitlagers 15.

In der dargestellten speziellen Ausführung sieht man zudem, dass die ersten Linearmagnete 30 um die Rotationsachse A rotierbar gelagert sind. Hierfür sitzen sie ebenfalls auf der Antriebswelle 51 (vgl. Fig. 1, 2, 3 und 5).

Des Weiteren liegen die zweiten Linearmagnete 40 des Mischkopfes 12 in der gleichen zylindrischen Mantelfläche um die Rotationsachse A wie die ersten Drehmomentmagnete 20 des Mischkopfes 12 (vgl. Fig. 1, 2, 4 und 5). Außerdem erstrecken sich die zweiten Linearmagnete 40 in dem Mischkopf 12 im Bereich benachbart zum Außenumfang des Spalttopfes 11 (vgl. Fig. 1). Dies insbesondere in dem Bereich, in dem der Spalttopf 11 hohl ausgestaltet ist. Gegenüberliegend erstrecken sich die ersten Linearmagnete 30 in dem Spalttopf 11 im Bereich des Außenumfangs des Spalttopfes 11 (vgl. Fig. 1).

Wie in Fig. 1 und besser noch in Fig. 4 erkennbar ist, erstreckt sich jeweils ein Magnetpaar bestehend aus einem der zweiten Linearmagnete 40 und einem der ersten Drehmomentmagnete 20 entlang eines stabförmigen Bereichs. Der zweite Linearmagnet 40 und der erste Drehmomentmagnet 20 eines Magnetpaares berühren sich. Die Magnetpaare lassen sich beispielsweise an eine Trägerglocke des Mischkopfes 12 ankleben. Wie man sieht, haben die zweiten Linearmagnete 40 und ersten Drehmomentmagnete 20 jeweils eine gleich große Dicke senkrecht zur Rotationsachse A und eine gleich große Breite auf der Kreisbahn um die Rotationsachse A.

Innerhalb der stabförmigen Bereiche sind in den Fig. 4 und 5 die magnetischen Pole gekennzeichnet (vgl. auch Fig. 1 und 2). Hieran wird deutlich, dass die Magnetpaare in einer Mantelfläche um Rotationsachse A angeordnet sind, wobei in Umfangsrichtung um die Rotationsachse A benachbart abwechselnd ein dritter Paartyp T3 und ein vierter Paartyp T4 angeordnet sind (vgl. Fig. 1, 2, 4 und 5). Der dritte Paartyp T3 ist ein Magnetpaar, bei dem der zweite Linearmagnet 40 mit dem magnetischen Pol in Richtung des ersten Drehmomentmagnets 50 weist, der vom ersten Drehmomentmagneten 50 in Richtung der Rotationsachse A weist. Hiervon unterscheidet sich der vierte Paartyp T4, der ein Magnetpaar ist, bei dem der zweite Linearmagnet 40 mit dem magnetischen Pol in Richtung des ersten Drehmomentmagnets 20 weist, der vom ersten Drehmomentmagneten 20 von der Rotationsachse A weg weist (vgl. Fig. 1, 2, 4 und 5).

Wie den Fig. 1, 2, 3 und 5 entnehmbar ist, sind die zweiten Drehmomentmagnete 50 rotationsfest mit den ersten Linearmagneten 30 verbunden. Hierfür sind sie auf der gemeinsamen Antriebswelle 51 befestigt. Hierin vorgesehene Aufnahmenuten lagern die ersten Linearmagnete 30 in der gleichen zylindrischen Mantelfläche relativ zur Rotationsachse A wie die zweiten Drehmomentmagnete 50. Dies führt auch dazu, dass sich jeweils ein Magnetpaar bestehend aus einem der ersten Linearmagnete 30 und einem der zweiten Drehmomentmagnete 50 entlang eines stabförmigen Bereichs erstreckt. Hierzu haben die ersten Linearmagnete 30 und zweiten Drehmomentmagnete 50 jeweils eine gleich große Dicke senkrecht zur Rotationsachse A und eine gleich große Breite auf der Kreisbahn um die Rotationsachse A. Unschwer erkennbar ist außerdem, dass die zweiten Drehmomentmagnete 50 länger sind als die ersten Linearmagnete 30.

In Umfangsrichtung um die Rotationsachse A sind benachbart abwechselnd ein erster Paartyp T1 und ein zweiter Paartyp T2 an Magneten angeordnet (vgl. Fig. 1, 2, 3 und 5). Der erste Paartyp T1 ist ein Magnetpaar, bei dem der erste Linearmagnet 30 mit dem magnetischen Pol in Richtung des zweiten Drehmomentmagnets 50 weist, der vom zweiten Drehmomentmagneten 50 von der Rotationsachse A weg weist. Dementgegen ist der zweite Paartyp T2 ein Magnetpaar, bei dem der erste Linearmagnet 30 mit dem magnetischen Pol in Richtung des zweiten Drehmomentmagnets 50 weist, mit dem der zweite Drehmomentmagnet 50 in Richtung der Rotationsachse A weist. Dabei sind der erste Linearmagnet 30 und der zweite Drehmomentmagnet 50 eines Magnetpaars jeweils sich berührend angeordnet.

Die Paartypen wirken derart zusammen, dass jeweils einer der ersten Paartypen T1 ein Kopplungspaar mit einem diesem gegenüberliegenden dritten Paartyp T3 ausbildet, und dass jeweils einer der zweiten Paartypen T2 ein Kopplungspaar mit einem diesem gegenüberliegenden vierten Paartyp T4 ausbildet (vgl. Fig. 1, 2 und 5).

In axialer Richtung der Rotationsachse A haben sowohl die ersten Drehmomentmagnete 20 die gleiche Länge wie die zweiten Drehmomentmagnete 50 als auch die ersten Linearmagnete 30 die gleiche Länge wie die zweiten Linearmagnete 40. In der von den Fig. 1, 2 und 5 gezeigten Nullpunktlage bzw. Gleichgewichtslage schließen die Paartypen T1, T2, T3, T4 alle in gemeinsamen oberen und unteren Ebenen ab. In Richtung lotrecht zur Rotationsachse A haben alle Linearmagnete 30, 40 und Drehmomentmagnete 20, 50 die gleiche Dicke.

Erwähnt sei, dass die Linearmagnete 30, 40 und die Drehmomentmagnete 20, 50 jeweils Permanentmagnete sind.

Gemäß den Fig. 1, 2 und 5 verfügt das Rührwerk 1, bzw. dessen Antriebseinheit 10, zudem über eine Sensorik zur Detektion der axiale Position des Mischkopfs 12 entlang der Rotationsachse A auf dem Spalttopf 11 und einer Rotationsgeschwindigkeit des Mischkopfes 12. Hierzu sind in einem Kragenbereich 16 des Mischkopfs 12 Sensormagnete 70 angeordnet, die mit einem Sensor 71 im Bodenbereich 17 des Spalttopfs 11 zusammenwirken.

Zur einfachen Reinigung liegen die ersten Drehmomentmagnete 20, die zweiten Linearmagnete 40 und die Sensormagnete 70 innerhalb einer Kapselung 18 des Mischkopfes 12.

Die Antriebswelle 51 ist unmittelbar oder über ein Getriebe mit einem nicht gezeigten Antriebsmotor verbindbar oder verbunden. Mittels einer Antriebssteuerung kann dann eine Drehzahlsteuerung und/oder eine Drehmomentsteuerung des Mischkopfes 12 eingestellt oder geregelt werden.

**Bezugszeichenliste**

| | | | |
|---|---|---|---|
| 1 | Rührwerk | 30 | erste Linearmagnete (Spalttopf) |
| 2 | Mischbehälter | 40 | zweite Linearmagnete (Mischkopf) |
| 3 | Behälterboden | | |
| | | N1 | magnetische Nordpole (erste Linearmagnete) |
| 10 | Antriebseinheit | | |
| 11 | Spalttopf | N2 | magnetische Nordpole (zweite Linearmagnete) |
| 12 | Mischkopf | | |
| 13 | Rührwerkzeug | S1 | magnetischen Südpole (erste Linearmagnete) |
| 14 | Magnetfeldeinheit | | |
| 15 | Gleitlager | S2 | magnetische Südpole (zweite Linearmagnete) |
| 16 | Kragenbereich (Mischkopf) | | |
| 17 | Bodenbereich (Spalttopf) | N1, S1 | magnetische Pole (erste Linearmagnete) |
| 18 | Kapselung | | |
| | | N2, S2 | magnetische Pole (zweite Linearmagnete) |
| 20 | erste Drehmomentmagnete (Mischkopf) | | |
| | | N1, N2, S1, S2 | magnetische Pole (Linearmagnete) |
| 50 | zweite Drehmomentmagnete (Spalttopf) | | |
| | | NK1 | erster Nordpolkranz (erste Linearmagnete) |
| 51 | Antriebswelle | | |
| | | NK2 | zweiter Nordpolkranz (zweite Linearmagnete) |
| N3 | magnetische Nordpole (erste Drehmomentmagnete) | | |
| | | SK1 | erster Südpolkranz (erste Linearmagnete) |
| N4 | magnetische Nordpole (zweite Drehmomentmagnete) | | |
| | | SK2 | zweiter Südpolkranz (zweite Linearmagnete) |
| S3 | magnetische Südpole (erste Drehmomentmagnete) | | |
| S4 | magnetische Südpole (zweite Drehmomentmagnete) | T1 | erster Paartyp (erster Linearmagnet abstoßend zu zweitem Drehmomentmagnet) |
| AK | äußere Kreisbahn (erste Drehmomentmagnete) | T2 | zweiter Paartyp (erster Linearmagnet anziehend zu zweitem Drehmomentmagnet) |
| IK | innere Kreisbahn (zweite Drehmomentmagnete) | | |
| T3 | dritter Paartyp (zweiter Linearmagnet abstoßend zu erstem Drehmomentmagnet) | 70 | Sensormagnete |
| | | 71 | Sensor |
| T4 | vierter Paartyp (zweiter Linearmagnet anziehend zu erstem Drehmomentmagnet) | A | Rotationsachse |
| | | B1 | Länge Drehmomentmagnete |
| | | B2 | Länge Linearmagnete |

## Patentansprüche

1. **Antriebseinheit** (10) für ein Rührwerk (1),
- mit einem Spalttopf (11), auf dem ein Mischkopf (12) mit einem Rührwerkzeug (13) sitzt,
- wobei der Mischkopf (12) über ein Gleitlager (15) rotierbar um eine Rotationsachse (A) und entlang der Rotationsachse (A) längsverschiebbar relativ zum Spalttopf (11) gelagert ist,
- wobei im Spalttopf (11) eine Magnetfeldeinheit (14) aufgenommen ist, mit der ein um den Spalttopf (11) rotierendes Magnetfeld erzeugbar ist,
- wobei der Mischkopf (12) erste Drehmomentmagnete (20) aufweist, welche eine Drehmomentkopplung mit der Magnetfeldeinheit (14) ausbilden,
- wobei der Mischkopf (12) mittels der Drehmomentkopplung und des rotierenden Magnetfelds rotierend um die Rotationsachse (A) antreibbar ist,
**dadurch gekennzeichnet, dass**
- die Magnetfeldeinheit (14) im Spalttopf (11) erste Linearmagnete (30) aufweist, welche eine axial in Richtung der Rotationsachse (A) wirkende Lagekopplung mit zweiten Linearmagneten (40) des Mischkopfes (12) ausbilden,
- wobei die ersten und zweiten Linearmagnete (30, 40) jeweils magnetische Pole (N1, N2, S1, S2) aufweisen, die im Wesentlichen parallel zur Rotationsachse (A) ausgerichtet sind,
- wobei die magnetischen Pole (N1, S1) der ersten Linearmagnete (30) gleich ausgerichtet sind,
- wobei die magnetischen Pole (N2, S2) der zweiten Linearmagnete (40) gleich ausgerichtet sind, und
- wobei die magnetischen Pole (N1, S1) der ersten Linearmagnete (30) umgekehrt zu den Polen (N2, S2) der zweiten Linearmagnete (40) ausgerichtet sind.

2. Antriebseinheit (10) nach Anspruch 1, **dadurch gekennzeichnet, dass** die magnetischen Nordpole (N1) der ersten Linearmagnete (30) auf einem ersten Nordpolkranz (NK1) um die Rotationsachse (A) angeordnet sind,
dass die magnetischen Südpole (S1) der ersten Linearmagnete (30) auf einem ersten Südpolkranz (SK1) um die Rotationsachse (A) angeordnet sind,
wobei der erste Südpolkranz (SK1) in Richtung der Rotationsachse (A) axial versetzt zum ersten Nordpolkranz (NK1) angeordnet ist,
dass die magnetischen Nordpole (N2) der zweiten Linearmagnete (40) auf einem zweiten Nordpolkranz (NK2) um die Rotationsachse (A) angeordnet sind, und
dass die magnetischen Südpole (S2) der zweiten Linearmagnete (40) auf einem zweiten Südpolkranz (SK2) um die Rotationsachse (A) angeordnet sind,
wobei der zweite Südpolkranz (SK2) in Richtung der Rotationsachse (A) axial versetzt zum zweiten Nordpolkranz (NK2) angeordnet ist.

3. Antriebseinheit (10) nach einem der Ansprüche 1 oder 2, **dadurch gekennzeichnet, dass** die ersten Linearmagnete (30) um die Rotationsachse (A) rotierbar gelagert sind.

4. Antriebseinheit (10) nach einem der vorhergehenden Ansprüche, **dadurch gekennzeichnet, dass** die zweiten Linearmagnete (40) des Mischkopfes (12) in der gleichen Mantelfläche um die Rotationsachse (A) angeordnet sind wie die ersten Drehmomentmagnete (20) des Mischkopfes (12).

5. Antriebseinheit (10) nach einem der vorhergehenden Ansprüche, **dadurch gekennzeichnet, dass** die ersten Linearmagnete (30) die gleiche Länge aufweisen wie die zweiten Linearmagnete (40).

6. Antriebseinheit (10) nach einem der vorhergehenden Ansprüche, **dadurch gekennzeichnet, dass** die ersten Drehmomentmagnete (20) auf einer äußeren Kreisbahn (AK) um die Rotationsachse (A) jeweils abwechselnd benachbart angeordnete magnetische Nordpole (N3) und Südpole (S3) ausbilden.

7. Antriebseinheit (10) nach Anspruch 6, **dadurch gekennzeichnet, dass** die magnetischen Nordpole (N3) und Südpole (S3) der ersten Drehmomentmagnete (20) im Wesentlichen senkrecht zur Rotationsachse (A) ausgerichtet sind.

8. Antriebseinheit (10) nach einem der vorhergehenden Ansprüche, **dadurch gekennzeichnet, dass** die Magnetfeldeinheit (14) einen Stator mit elektrischen Leiterwicklungen aufweist, wobei das um den Spalttopf (11) rotierende Magnetfeld ein mit den Leiterwicklungen elektronisch erzeugtes Magnetfeld ist.

9. Antriebseinheit (10) nach einem der Ansprüche 1 bis 7, **dadurch gekennzeichnet, dass** die Magnetfeldeinheit (14) zweite Drehmomentmagnete (50) aufweist, welche an einer Antriebswelle (51) rotierbar um die Rotationsachse (A) innerhalb des Spalttopfes (11) gelagert sind.

10. Antriebseinheit (10) nach Anspruch 9, **dadurch gekennzeichnet, dass** die magnetischen Nordpole (N4) und Südpole (S4) der zweiten Drehmomentmagnete (50) im Wesentlichen senkrecht zur Rotationsachse (A) ausgerichtet sind.

11. Antriebseinheit (10) nach einem der Ansprüche 9 oder 10, **dadurch gekennzeichnet, dass** die zweiten Drehmomentmagnete (50) rotationsfest mit den ersten Linearmagneten (30) verbunden sind.

12. Antriebseinheit (10) nach einem der Ansprüche 9 bis 11, **dadurch gekennzeichnet, dass** die ersten Linearmagnete (30) in der gleichen Mantelfläche relativ zur Rotationsachse (A) angeordnet sind wie die zweiten Drehmomentmagnete (50).

13. Antriebseinheit (10) nach einem der Ansprüche 9 bis 12, **dadurch gekennzeichnet, dass** sich jeweils ein Magnetpaar bestehend aus einem der ersten Linearmagnete (30) und einem der zweiten Drehmomentmagnete (50) entlang eines stabförmigen Bereichs erstreckt.

14. Antriebseinheit (10) nach Anspruch 13, **dadurch gekennzeichnet, dass** die Magnetpaare in einer Mantelfläche um die Rotationsachse (A) angeordnet sind, wobei in Umfangsrichtung um die Rotationsachse (A) benachbart abwechselnd ein erster Paartyp (T1) und ein zweiter Paartyp (T2) angeordnet sind,
wobei der erste Paartyp (T1) ein Magnetpaar ist, bei dem der erste Linearmagnet (30) mit dem magnetischen Pol in Richtung des zweiten Drehmomentmagnets (50) weist, der vom zweiten Drehmomentmagnet (50) von der Rotationsachse (A) weg weist, und wobei der zweite Paartyp (T2) ein Magnetpaar ist, bei dem der erste Linearmagnet (30) mit dem magnetischen Pol in Richtung des zweiten Drehmomentmagnets (50) weist, der vom zweiten Drehmomentmagnet (50) in Richtung der Rotationsachse (A) weist.

15. **Rührwerk** (1) mit einem Mischbehälter (2), der einen Behälterboden (3) aufweist, wobei am Behälterboden (3) eine Antriebseinheit (10) nach einem der Ansprüche 1 bis 14 angeordnet ist, wobei der Mischkopf (12) auf dem Spalttopf (11) angeordnet und mit dem Rührwerkzeug (13) oberhalb des Behälterbodens (3) rotierbar ist.

## Claims

1. **Drive unit** (10) for a stirring device (1),
- with a separating can (11), on which a mixing head (12) with a stirring tool (13) sits,
- wherein the mixing head (12) is mounted rotatably via a sliding bearing (15) about an axis of rotation (A) and along the axis of rotation (A) longitudinally displaceably relative to the separating can (11),
- wherein a magnetic field unit (14) is accommodated in the separating can (11), with which a magnetic field rotating about the separating can (11) can be generated,
- wherein the mixing head (12) has first torque magnets (20), which form a torque coupling with the magnetic field unit (14),
- wherein the mixing head (12) can be driven by means of the torque coupling and the rotating magnetic field rotationally about the axis of rotation (A),
**characterised in that**
- the magnetic field unit (14) in the separating can (11) has first linear magnets (30), which form a location coupling acting axially in the direction of the axis of rotation (A) with second linear magnets (40) of the mixing head (12),
- wherein the first and second linear magnets (30, 40) in each case have magnetic poles (N1, N2, S1, S2), that are aligned substantially parallel to the axis of rotation (A),
- wherein the magnetic poles (N1, S1) of the first linear magnets (30) have the same alignment,
- wherein the magnetic poles (N2, S2) of the second linear magnets (40) have the same alignment, and
- wherein the magnetic poles (N1, S1) of the first linear magnets (30) are aligned inversely to the poles (N2, S2) of the second linear magnets (40).

2. Drive unit (10) according to claim 1, **characterised in that** the magnetic north poles (N1) of the first linear magnets (30) are arranged on a first north pole ring (NK1) about the axis of rotation (A),
that the magnetic south poles (S1) of the first linear magnets (30) are arranged on a first south pole ring (SK1) about the axis of rotation (A),
wherein the first south pole ring (SK1) is arranged in the direction of the axis of rotation (A) axially offset with respect to the first north pole ring (NK1),
that the magnetic north poles (N2) of the second linear magnets (40) are arranged on a second north pole ring (NK2) about the axis of rotation (A), and
that the magnetic south poles (S2) of the second linear magnets (40) are arranged on a second south pole ring (SK2) about the axis of rotation (A),
wherein the second south pole ring (SK2) is arranged in the direction of the axis of rotation (A) axially offset with respect to the north pole ring (NK2).

3. Drive unit (10) according to any one of claims 1 or 2, **characterised in that** the first linear magnets (30) are rotatably mounted about the axis of rotation (A).

4. Drive unit (10) according to any one of the preceding claims, **characterised in that** the second linear magnets (40) of the mixing head (12) are arranged in the same lateral surface about the axis of rotation (A) as the first torque magnets (20) of the mixing head (12).

5. Drive unit (10) according to any one of the preceding claims, **characterised in that** the first linear magnets (30) have the same length as the second linear magnets (40).

6. Drive unit (10) according to any one of the preceding claims **characterised in that** the first torque magnets (20) in each case form magnetic north poles (N3) and south poles (S3) arranged alternatingly adjacently on an outer circular path (AK) about the axis of rotation (A).

7. Drive unit (10) according to claim 6, **characterised in that** the magnetic north poles (N3) and south poles (S3) of the first torque magnets (20) are aligned substantially perpendicular to the axis of rotation (A).

8. Drive unit (10) according to any one of the preceding claims, **characterised in that** the magnetic field unit (14) has a stator with electrical conductor windings, wherein the magnetic field rotating about the separating can (11) is a magnetic field generated electronically with the conductor windings.

9. Drive unit (10) according to any one of claims 1 to 7, **characterised in that** the magnetic field unit (14) has second torque magnets (50), that are mounted on a drive shaft (51) rotatably about the axis of rotation (A) within the separating can (11).

10. Drive unit (10) according to claim 9, **characterised in that** the magnetic north poles (N4) and south poles (S4) of the second torque magnets (50) are aligned substantially perpendicular to the axis of rotation (A).

11. Drive unit (10) according to any one of claims 9 or 10, **characterised in that** the second torque magnets (50) are connected non-rotatably with the first linear magnets (30).

12. Drive unit (10) according to any one of claims 9 to 11, **characterised in that** the first linear magnets (30) are arranged in the same lateral surface relative to the axis of rotation (A) as the second torque magnets (50).

13. Drive unit (10) according to any one of claims 9 to 12, **characterised in that** in each case a pair of magnets consisting of one of the first linear magnets (30) and one of the second torque magnets (50) extends along a rod-shaped area.

14. Drive unit (10) according to claim 13, **characterised in that** the pairs of magnets are arranged in a lateral surface about the axis of rotation (A), wherein a first pair type (T1) and a second pair type (T2) are arranged alternatingly adjacently in the circumferential direction about the axis of rotation (A),
wherein the first pair type (T1) is a pair of magnets, in which the first linear magnet (30) points with the magnetic pole in the direction of the second torque magnet (50), that points from the second torque magnet (50) away from the axis of rotation (A), and wherein the second pair type (T2) is a pair of magnets, in which the first linear magnet (30) points with the magnetic pole in the direction of the second torque magnet (50), that points from the second torque magnet (50) in the direction of the axis of rotation (A).

15. **Stirring device** (1) with a mixing container (2), that has a container bottom (3), wherein a drive unit (10) according to any one of claims 1 to 14 is arranged on the container bottom (3), wherein the mixing head (12) is arranged on the separating can (11) and can be rotated with the stirring tool (13) above the container bottom (3).

## Revendications

1. **Unité d'entraînement** (10) d'un agitateur (1),
- avec un pot d'entrefer (11) sur lequel loge une tête de mélange (12) avec un outil d'agitation (13),
- dans laquelle la tête de mélange (12) est logée de manière rotative par le biais d'un palier lisse (15) autour d'un axe de rotation (A) et le long de l'axe de rotation (A) de manière mobile longitudinalement par rapport au pot d'entrefer (11),
- dans laquelle dans le pot d'entrefer (11) une unité de champ magnétique (14) est reçue, avec laquelle un champ magnétique rotatif autour du pot d'entrefer (11) peut être généré,
- dans laquelle la tête de mélange (12) présente des premiers aimants de couple (20), lesquels réalisent un couplage de couple avec l'unité de champ magnétique (14),
- dans laquelle la tête de mélange (12) peut être entraînée de manière rotative autour de l'axe de rotation (A) au moyen du couplage de couple et du champ magnétique rotatif,
**caractérisée en ce que**
- l'unité de champ magnétique (14) présente dans le pot d'entrefer (11) des premiers aimants linéaires (30) qui réalisent un couplage de position agissant axialement en direction de l'axe de rotation (A) avec des seconds aimants linéaires (40) de la tête de mélange (12),
- dans laquelle les premier et second aimants linéaires (30, 40) présentent respectivement des pôles magnétiques (N1, N2, S1, S2) qui sont orientés sensiblement parallèlement à l'axe de rotation (A),
- dans laquelle les pôles magnétiques (N1, S1) des premiers aimants linéaires (30) sont orientés de manière identique,
- dans laquelle les pôles magnétiques (N2, S2) des seconds aimants linéaires (40) sont orientés de manière identique, et
- dans laquelle les pôles magnétiques (N1, S1) des premiers aimants linéaires (30) sont orientés inversement aux pôles (N2, S2) des seconds aimants linéaires (40).

2. Unité d'entraînement (10) selon la revendication 1, **caractérisée en ce que** les pôles nord magnétiques (N1) des premiers aimants linéaires (30) sont agencés sur une première couronne de pôle nord (NK1) autour de l'axe de rotation (A),
les pôles sud magnétiques (S1) des premiers aimants linéaires (30) sont agencés sur une première couronne de pôle sud (SK1) autour de l'axe de rotation (A),
dans laquelle la première couronne de pôle sud (SK1) est agencée en déport axial de la première couronne de pôle nord (NK1) en direction de l'axe de rotation (A),
les pôles nord magnétiques (N2) des seconds aimants linéaires (40) sont agencés sur une seconde couronne de pôle nord (NK2) autour de l'axe de rotation (A), et
les pôles sud magnétiques (S2) des seconds aimants linéaires (40) sont agencés sur une seconde couronne de pôle sud (SK2) autour de l'axe de rotation (A),
dans laquelle la seconde couronne de pôle sud (SK2) est agencée en déport axial de la seconde couronne de pôle nord (NK2) en direction de l'axe de rotation (A).

3. Unité d'entraînement (10) selon l'une quelconque des revendications 1 ou 2, **caractérisée en ce que** les premiers aimants linéaires (30) sont logés de manière rotative autour de l'axe de rotation (A).

4. Unité d'entraînement (10) selon l'une quelconque des revendications précédentes, **caractérisée en ce que** les seconds aimants linéaires (40) de la tête de mélange (12) sont agencés dans la même surface d'enveloppe autour de l'axe de rotation (A) que les premiers aimants de couple (20) de la tête de mélange (12).

5. Unité d'entraînement (10) selon l'une quelconque des revendications précédentes, **caractérisée en ce que** les premiers aimants linéaires (30) présentent la même longueur que les seconds aimants linéaires (40).

6. Unité d'entraînement (10) selon l'une quelconque des revendications précédentes, **caractérisée en ce que** les premiers aimants de couple (20) réalisent des pôles nord (N3) et pôles sud (S3) magnétiques agencés respectivement de manière contiguë alternativement sur une trajectoire circulaire (AK) extérieure autour de l'axe de rotation (A).

7. Unité d'entraînement (10) selon la revendication 6, **caractérisée en ce que** les pôles nord (N3) et pôles sud (S3) magnétiques des premiers aimants de couple (20) sont orientés sensiblement perpendiculairement à l'axe de rotation (A).

8. Unité d'entraînement (10) selon l'une quelconque des revendications précédentes, **caractérisée en ce que** l'unité de champ magnétique (14) présente un stator avec des enroulements conducteurs électriques, dans laquelle le champ magnétique rotatif autour du pot d'entrefer (11) est un champ magnétique généré électroniquement avec les enroulements conducteurs.

9. Unité d'entraînement (10) selon l'une quelconque des revendications 1 à 7, **caractérisée en ce que** l'unité de champ magnétique (14) présente des seconds aimants de couple (50), lesquels sont logés sur un arbre d'entraînement (51) de manière rotative autour de l'axe de rotation (A) à l'intérieur du pot d'entrefer (11).

10. Unité d'entraînement (10) selon la revendication 9, **caractérisée en ce que** les pôles nord (N4) et pôles sud (S4) magnétiques des seconds aimants de couplage (50) sont orientés sensiblement perpendiculairement à l'axe de rotation (A).

11. Unité d'entraînement (10) selon l'une quelconque des revendications 9 ou 10, **caractérisée en ce que** les seconds aimants de couple (50) sont raccordés de manière solidaire en rotation aux premiers aimants linéaires (30).

12. Unité d'entraînement (10) selon l'une quelconque des revendications 9 à 11, **caractérisée en ce que** les premiers aimants linéaires (30) sont agencés dans la même surface d'enveloppe par rapport à l'axe de rotation (A) que les seconds aimants de couple (50).

13. Unité d'entraînement (10) selon l'une quelconque des revendications 9 à 12, **caractérisée en ce que** respectivement une paire d'aimants se composant d'un des premiers aimants linéaires (30) et d'un des seconds aimants de couple (50) s'étend le long d'une zone en forme de barre.

14. Unité d'entraînement (10) selon la revendication 13, **caractérisée en ce que** les paires d'aimants sont agencées dans une surface d'enveloppe autour de l'axe de rotation (A), dans laquelle un premier type de paire (T1) et un second type de paire (T2) sont agencés alternativement de manière contiguë dans le sens périphérique autour de l'axe de rotation (A),
dans laquelle le premier type de paire (T1) est une paire d'aimants, pour laquelle le premier aimant linéaire (30) est dirigé avec le pôle magnétique en direction du second aimant de couple (50) qui est dirigé par le second aimant de couple (50) loin de l'axe de rotation (A), et
dans laquelle le second type de paire (T2) est une paire d'aimants, pour laquelle le premier aimant linéaire (30) est dirigé avec le pôle magnétique en direction du second aimant de couple (50) qui est dirigé par le second aimant de couple (50) en direction de l'axe de rotation (A).

15. **Agitateur** (15) avec un réservoir de mélange (2) qui présente un fond de récipient (3), dans lequel sur le fond de récipient (3) une unité d'entraînement (10) selon l'une quelconque des revendications 1 à 14 est agencée, dans lequel la tête de mélange (12) est agencée sur le pot d'entrefer (11) et peut être tournée avec l'outil d'agitation (13) au-dessus du fond de récipient (3).
